# FASCICULE DE BREVET EUROPEEN

(11) **EP 2 652 484 B1**
(45) Date de publication et mention de la délivrance du brevet: **25.02.2015**
(21) Numéro de dépôt: 11811086.5
(22) Date de dépôt: 12.12.2011
(51) Int. Cl.: G01N 21/85

(54) **SONDE OPTIQUE POUR MESURER DES CARACTERISTIQUES PHYSIQUES ET CHIMIQUES D'UN MILIEU EN ECOULEMENT**
OPTISCHE SONDE ZUR MESSUNG PHYSIKALISCHEN UND CHEMISCHEN EIGENSCHAFTEN EINES STRÖMENDEN MEDIUMS
OPTICAL PROBE FOR MEASURING PHYSICAL AND CHEMICAL CHARACTERISTICS OF A FLOWING MEDIUM

(30) Priorité: 13.12.2010 FR 1060411
(43) Date de publication de la demande: 23.10.2013
(73) Titulaire: ONERA (Office National d'Etudes et de Recherches Aérospatiales), 92320 Châtillon (FR)
(72) Inventeur: MOHAMED, Ajmal, F-91120 Palaiseau (FR); VALLON, Raphaël, F-51100 Reims (FR)
(74) Mandataire: Cabinet Plasseraud
(86) Numéro de dépôt international: PCT/FR2011/052944
(87) Numéro de publication internationale: WO 2012/080639

(56) Documents cités:
- WO-A1-2007/000166
- DE-A1-102008 050 109
- US-A- 3 867 033
- WEHE, S., D. ET AL: "Diode-Laser Sensor for Velocity Measurement in Hypervelocity Flows", AIAA JOURNAL, vol. 37, no. 8, 1999, pages 1013-1015, XP008138556,
- Hanson, R., K.: "Graduate Research Training in Advanced Diagnostic Techniques", 14 octobre 2000 (2000-10-14), Stanford University, USA, California, USA, XP002645400, Document consists of 2FP, 1-6, Reporting Form. page 3 - page 4; figure 1

## Description

La présente invention concerne une sonde optique pour mesurer des caractéristiques physiques et chimiques d'un milieu fluide transparent en écoulement, par détection d'un faisceau lumineux qui est issu d'au moins une source de rayonnement.

Une telle sonde est destinée à être placée dans l'écoulement, et comporte deux doigts rigides et distants dont des axes longitudinaux respectifs sont parallèles. La sonde est orientée pour que ces axes longitudinaux des doigts soient en outre parallèles au vecteur de vitesse de l'écoulement. Chaque doigt possède une extrémité en amont dans l'écoulement, une extrémité en aval, et une zone latérale de qualité optique pour transmettre le faisceau lumineux entre le doigt et le milieu.

L'extrémité en aval d'un premier des deux doigts est adaptée pour recevoir le faisceau lumineux qui est issu de la source, et l'extrémité en aval d'un second des deux doigts est adaptée pour transmettre ce faisceau lumineux vers un détecteur.

De façon connue, chaque extrémité en amont de doigt est pourvue d'une face d'extrémité qui est oblique par rapport à l'axe longitudinal, et forme un coin saillant avec une surface latérale du même doigt pour fendre l'écoulement. Une telle forme des extrémités des doigts qui sont en amont dans l'écoulement permet de réduire les perturbations que la sonde provoque dans l'écoulement, et par suite de réduire aussi des altérations du milieu lui-même qui sont causées par les perturbations de l'écoulement. Par exemple, lorsque l'écoulement est supersonique, l'extrémité en amont de chaque doigt provoque une onde de choc dans l'écoulement, qui elle-même provoque une variation de la densité du milieu. La forme en coin saillant des extrémités en amont des doigts réduit de tels effets perturbateurs, de sorte que les caractéristiques du milieu en écoulement qui sont obtenues avec la sonde sont plus représentatives de l'état du milieu en absence de sonde.

Par ailleurs, les zones latérales de qualité optique des deux doigts sont situées pour transmettre le faisceau lumineux de l'une vers l'autre à travers le milieu, selon un trajet entre les deux doigts qui n'est pas orthogonal au vecteur de vitesse de l'écoulement. Ainsi, l'effet Doppler qui affecte la détection de bandes spectroscopiques d'absorption du milieu permet d'obtenir une mesure de la vitesse de l'écoulement.

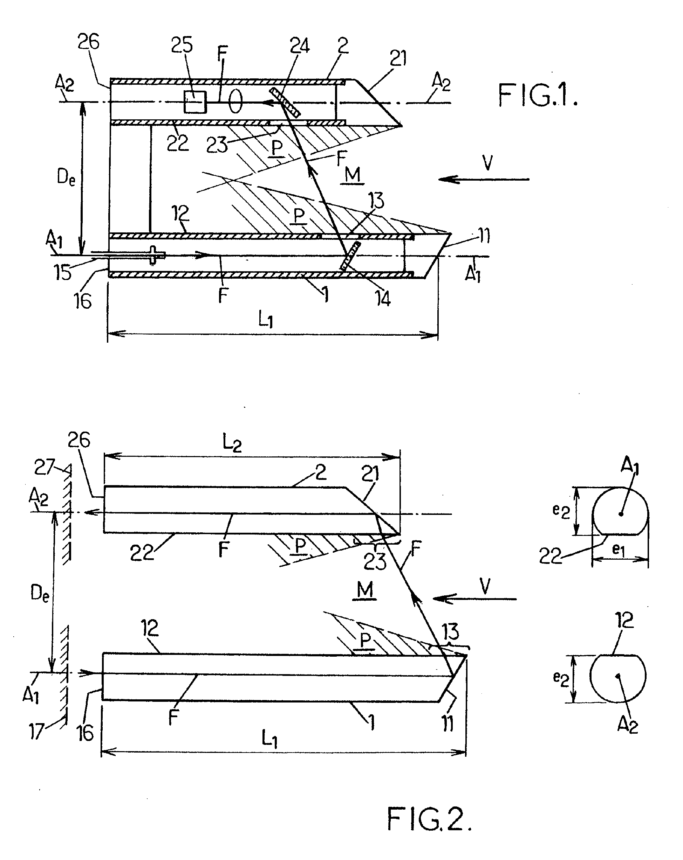

L'article intitulé «Measurements of Gas Temperature and Velocity in Hypervelocity Flows Using Diode-Laser Sensors» de S.D. Wehe et al., de l'American Institute of Aeronautics and Astronautics, Inc., 1998, décrit une telle sonde ainsi que son utilisation. Dans la sonde décrite, chaque doigt est un tube creux qui contient plusieurs composants optiques tels que des miroirs, prismes et lentilles. Le faisceau lumineux se propage dans le volume libre interne de chaque tube, et sort de celui-ci ou y pénètre à travers des fenêtres latérales qui constituent les zones de qualité optique du doigt. Par construction, ces fenêtres sont situées à distance de la face d'extrémité en amont du doigt correspondant, pour chacun des deux doigts de la sonde. Il est important de noter que sur le doigt le plus en amont, le faisceau lumineux est divisé en un faisceau de mesure oblique par rapport à l'axe des doigts afin de pouvoir mesurer un effet Doppler dans l'écoulement, et un faisceau de référence perpendiculaire à l'axe du doigt pour y éviter toute contribution de cet effet. La figure 1 est une vue en coupe d'une telle sonde optique, avec les références suivantes :
M : milieu dans lequel la sonde est placée,
V : vecteur de vitesse de l'écoulement du milieu,
F : faisceau lumineux,
1 : doigt d'amenée du faisceau lumineux F,
A₁ axe longitudinal du doigt 1,
11 : face d'extrémité en amont du doigt 1,
12 : chant latéral du doigt 1,
13 : fenêtre optique du doigt 1,
14 : miroir interne du doigt 1,
15 : fibre optique d'introduction du faisceau lumineux F,
16 : extrémité en aval du doigt 1,
2 : doigt de reprise du faisceau lumineux F ;
A₂ : axe longitudinal du doigt 2,
21 : face d'extrémité en amont du doigt 2,
22 : chant latéral du doigt 2,
23 : fenêtre optique du doigt 2,
24 : miroir interne du doigt 2,
25 : détecteur lumineux,
26 : extrémité en aval du doigt 2.

Pour le doigt 1 (respectivement 2), la face d'extrémité 11 (resp. 21) forme avec le chant 12 (resp. 22) un coin saillant à angle aigu qui pénètre dans le milieu M en écoulement et qui a pour seule fonction de minimiser la déviation des lignes de courant autour de la sonde, par rapport à l'écoulement en l'absence de la sonde.

Une perturbation de l'écoulement et/ou du milieu M qui est générée à l'extrémité en amont de chaque doigt 1 (resp. 2) est transportée vers son extrémité en aval par l'écoulement lui-même. Elle affecte alors une partie P du milieu M qui est de plus en plus large dans des plans perpendiculaires à l'axe longitudinal A₁ (resp. A₂) lorsque ces plans sont plus éloignés de la face d'extrémité en amont 11 (resp. 21) en direction de l'extrémité en aval 16 (resp. 26). En fonction de la vitesse de l'écoulement, la partie perturbée P du milieu M peut être une zone de turbulence créée dans l'écoulement par chaque doigt, ou un cône d'onde de choc supersonique qui est issu de chaque extrémité en amont de doigt. Les zones hachurées dans la figure 1 montrent ces parties perturbées P du milieu M entre les deux doigts. A cause de la distance entre l'extrémité en amont 11, 21 et la fenêtre optique 13, 23 pour chaque doigt 1, 2, une proportion importante de la longueur du trajet du faisceau F entre les deux doigts 1 et 2 est alors contenue dans ces parties perturbées P du milieu M. Il en résulte des altérations pour les valeurs des caractéristiques physiques et chimiques qui sont obtenues avec la sonde, par rapport aux valeurs de ces mêmes caractéristiques en l'absence de sonde.

De plus, la structure d'une telle sonde optique présente les inconvénients suivants, notamment à cause de la multiplicité de ces composants :
- son prix qui est élevé ;
- son assemblage qui est difficile, particulièrement pour positionner et orienter chaque composant optique afin que le faisceau lumineux F suive précisément le trajet de la fibre 15 au miroir 14, puis au miroir 24 à travers les fenêtres 13 et 23, et enfin jusqu'au détecteur 25 ;
- la sonde est sensible aux chocs et aux vibrations qui sont susceptibles de provoquer des défauts d'alignement de certains de ces composants optiques. Des erreurs peuvent alors en résulter pour la mesure des caractéristiques de l'écoulement et du milieu M ;
- la structure de la sonde à composants multiples empêche d'en réduire les dimensions qui sont de l'ordre de 10 cm (centimètre) pour la longueur L₁ du doigt 1 et 5 cm pour la distance d'écartement De entre les axes longitudinaux A₁ et A₂. De ce fait, une résolution spatiale des mesures qui peuvent être obtenues avec la sonde est limitée. De plus, la perturbation qui est créée par la sonde dans l'écoulement ne peut pas être réduite pour cette raison ; et
- enfin, la propagation du faisceau lumineux F à l'intérieur de chaque tube de doigt creux peut être perturbée par une pénétration involontaire du milieu M dans ces tubes. Une telle entrée du milieu M dans les tubes des doigts altère aussi les résultats qui sont obtenus avec la sonde optique pour les caractéristiques de l'écoulement et du milieu M.

L'article des mêmes auteurs S.D. Wehe et al., intitulé «DiodeLaser Sensor for Velociy Measurements in Hypervelocity Flows», AIAA Journal, Vol. 37, NO. 8, concerne le même type de sonde.

Enfin, le document DE 10 2008 050109, qui correspond aussi à US 2010/0027015, divulgue une sonde optique dans laquelle les deux doigts sont de même longueur, si bien que le faisceau lumineux suit un trajet entre ces deux doigts qui est perpendiculaire aux doigts eux-mêmes. Une telle sonde est adaptée pour effectuer des mesures dans un milieu fluide transparent qui est statique. Mais elle ne permet pas de réaliser des mesures qui soient basées sur un effet Doppler généré par un écoulement du milieu parallèlement aux doigts. Les coins saillants à angle aigu en extrémité des doigts ont pour seule fonction de supporter des miroirs.

En outre, la sonde des documents DE 10 2008 050109 et US 2010/0027015 possède des miroirs obliques qui sont disposés aux extrémités des doigts, et qui sont constitués de couches minces, notamment de couches métalliques. Or de telles couches sont sensibles à la corrosion et/ou à l'ablation que peuvent provoquer certains milieux fluides pour lesquels la sonde peut être utilisée. Le fonctionnement de la sonde est alors progressivement dégradé.

Dans ces conditions, l'invention a pour but de proposer une sonde optique de mesure de caractéristiques physiques et chimiques d'un milieu en écoulement, qui ne présente pas les inconvénients précédents ou pour laquelle ces inconvénients sont réduits.

Plus particulièrement, un premier but de l'invention consiste à proposer une telle sonde dont la structure est simplifiée et son coût diminué.

Un deuxième but de l'invention est de proposer une sonde qui est plus petite que les sondes existantes.

Un troisième but de l'invention est de proposer une sonde qui fournit des résultats de mesure qui sont plus représentatifs du milieu en écoulement en l'absence de sonde.

Un quatrième but de l'invention consiste à proposer une sonde qui permette de réaliser des mesures basées sur un effet Doppler qui est généré par un écoulement du milieu fluide, lorsque la sonde est orientée dans le milieu pour réduire la perturbation de l'écoulement.

Un cinquième but de l'invention est de proposer une sonde pour laquelle les résultats de mesure sont moins susceptibles d'être altérés par des défauts d'alignement de composants optiques ou des défauts d'étanchéité de la sonde par rapport au milieu de mesure.

Enfin, un sixième but de l'invention consiste à proposer une sonde qui soit peut sensible à la corrosion chimique ou à l'ablation que pourrait provoquer le milieu fluide à mesurer dans lequel elle est immergée.

L'intérêt de l'invention est de mettre en oeuvre un moyen unique, le coin saillant, pour atteindre ces buts. Ce moyen permet de combiner une fonction optique et une fonction pour minimiser la déviation des lignes de courant autour de la sonde, par rapport à l'écoulement en l'absence de la sonde.

Pour atteindre ces buts et d'autres, l'invention propose une sonde optique selon la revendication 1 du type décrit en introduction, dans laquelle chaque doigt comprend un barreau plein, monobloc, d'un matériau qui est optiquement transparent pour le faisceau lumineux. Ce barreau s'étend à partir de l'extrémité en aval jusqu'à la face d'extrémité en amont du doigt correspondant, et la zone latérale de qualité optique de chaque doigt est formée par un dioptre entre le matériau du barreau et le milieu.

De plus, pour chaque doigt, sa face d'extrémité en amont est de qualité optique, et sa zone latérale de qualité optique est située dans le coin saillant de ce doigt.

De cette façon, lors d'une utilisation de la sonde optique, le faisceau lumineux qui est reçu à l'extrémité en aval du premier doigt suit le trajet suivant dans la sonde optique :
il se propage rectilignement et longitudinalement dans le barreau du premier doigt à l'intérieur du matériau de ce barreau, puis
il est réfléchi sur la face d'extrémité en amont du premier doigt à l'intérieur du barreau de ce doigt, en direction de la zone latérale de qualité optique du même premier doigt, puis
il est réfracté par le dioptre de la zone latérale de qualité optique du premier doigt, du matériau du barreau vers le milieu, en direction de la zone latérale de qualité optique du second doigt, puis
il traverse le milieu en écoulement entre les premier et second doigts, puis
il est réfracté par le dioptre de la zone latérale de qualité optique du second doigt, du milieu vers le matériau du barreau, en direction de la face d'extrémité en amont du même second doigt, puis
il est réfléchi sur la face d'extrémité en amont du second doigt à l'intérieur du barreau de ce doigt, puis
il se propage rectilignement et longitudinalement dans le barreau du second doigt à l'intérieur du matériau de ce barreau en direction de l'extrémité en aval du second doigt.

Ainsi, dans une sonde optique selon l'invention, chaque doigt peut être constitué par une pièce unique. Sa structure est donc simplifiée et son coût réduit. Grâce à cette structure simplifiée, la sonde peut être miniaturisée, permettant de réaliser des mesures avec une résolution spatiale plus fine.

En outre, une telle sonde plus petite perturbe moins l'écoulement du milieu dans lequel elle est placée, si bien que les résultats de mesure qui sont obtenus sont plus représentatifs du milieu en écoulement tel qu'il serait en l'absence de la sonde.

Simultanément, la position de chaque zone latérale de qualité optique au plus près de la face d'extrémité en amont du doigt correspondant, permet de minimiser la proportion du trajet du faisceau lumineux entre les deux doigts qui pourrait être située dans une partie du milieu en écoulement perturbée par la sonde elle-même. En effet, cette position des zones latérales de qualité optique assure que d'éventuelles turbulences ou un éventuel cône d'onde de choc qui serait généré à partir de l'extrémité en amont de chaque doigt, ne contienne qu'une partie très réduite de la longueur du trajet du faisceau lumineux entre les deux doigts.

Enfin, chaque doigt étant constitué d'un barreau plein, aucun désalignement de composants ni aucune pénétration involontaire du milieu à l'intérieur des doigts ne sont susceptibles de se produire.

Dans des réalisations préférées d'une sonde optique selon l'invention, celle-ci peut être adaptée pour que les réflexions du faisceau lumineux sur les faces d'extrémités en amont respectives des deux doigts soient des réflexions totales. De cette façon, une intensité lumineuse qui est supérieure peut être détectée lors des mesures. La précision des valeurs qui sont obtenues pour les caractéristiques du milieu en écoulement est alors supérieure.

De façon encore plus préférée, la face d'extrémité en amont de chaque doigt de la sonde peut être constituée d'une interface dioptrique entre le matériau du barreau correspondant et le milieu fluide dans lequel la sonde est destinée à être immergée. Cette interface dioptrique peut être orientée de sorte que le faisceau lumineux subisse une réflexion totale interne sur cette interface dioptrique, à l'intérieur du matériau du barreau. Dans le cadre de la présente invention, on entend par réflexion totale interne le mode de réflexion qui survient à partir d'un premier milieu diélectrique réfringent contre un second milieu diélectrique qui est moins réfringent que le premier, et pour des valeurs élevées d'angle d'incidence telles qu'une proportion de l'énergie du faisceau incident qui est transmise au second milieu sous forme d'onde progressive, soit nulle. Grâce à un tel mode de réalisation des faces d'extrémités en amont des doigts, leur efficacité de réflexion optique n'est pas sensible à une éventuelle corrosion ou ablation qui serait provoquée par les milieux dans lesquels la sonde est immergée.

L'invention propose aussi un dispositif de mesure d'au moins une caractéristique physique ou chimique d'un milieu fluide transparent en écoulement, cette (ces) caractéristique(s) étant sélectionnée(s) parmi une vitesse de l'écoulement, une température du milieu, une pression du milieu, une masse volumique du milieu, et une concentration d'au moins un composé chimique contenu dans le milieu, le dispositif comprenant :
- une sonde optique conforme à l'invention telle que décrite précédemment ;
- un ensemble de source lumineuse à longueur d'onde variable, qui est adapté pour produire le faisceau lumineux et agencé pour le transmettre à l'extrémité en aval du premier doigt ;
- un détecteur photométrique, qui est agencé pour mesurer une intensité du faisceau lumineux transmis entre les deux doigts, pour chaque longueur d'onde de l'ensemble de source lumineuse lors d'un fonctionnement du dispositif de mesure ; et
- des moyens de traitement de signaux de mesure produits par le détecteur, qui sont adaptés pour fournir une valeur pour chaque caractéristique sélectionnée du milieu en écoulement à partir d'une analyse spectrale des signaux de mesure.

De préférence, l'ensemble de source lumineuse peut être du type laser à longueur d'onde variable, pour obtenir une précision supérieure dans les valeurs de caractéristiques physiques et chimiques qui sont produites par le dispositif de mesure.

L'invention propose enfin un procédé de mesure d'une ou plusieurs des caractéristiques précitées du milieu en écoulement, ce procédé comprenant les étapes suivantes :
- utiliser un dispositif de mesure tel que proposé par l'invention ;
- disposer la sonde optique dans le milieu, avec les axes longitudinaux des doigts qui sont orientés parallèlement au vecteur de vitesse de l'écoulement, et en orientant vers l'amont de l'écoulement les extrémités des doigts qui sont pourvues des faces d'extrémités obliques formant des coins saillants avec les surfaces latérales respectives des doigts ;
- activer simultanément l'ensemble de source lumineuse et le détecteur pour obtenir des signaux de mesure respectifs pour les longueurs d'onde de l'ensemble de source lumineuse ; et
- commander les moyens de traitement pour obtenir une valeur pour chaque caractéristique sélectionnée du milieu en écoulement à partir d'une analyse spectrale des signaux de mesure.

De façon particulièrement avantageuse, le procédé de l'invention permet d'obtenir simultanément des valeurs pour plusieurs caractéristiques du milieu en écoulement. Notamment, ces valeurs peuvent être obtenues à partir d'une analyse spectrale unique des mêmes signaux de mesure qui sont produits par le détecteur. Ainsi, le milieu en écoulement peut être caractérisé d'une façon particulièrement complète et rapide.

D'autres particularités et avantages de la présente invention apparaîtront dans la description ci-après d'exemples de réalisation non limitatifs, en référence aux dessins annexés, dans lesquels :
- la figure 1, déjà présentée, représente une sonde optique connue avant la présente invention ;
- la figure 2 représente deux doigts d'une sonde optique conforme à la présente invention, en longueur et en section ;
- la figure 3 est une vue en perspective des doigts de la figure 2 ;
- la figure 4 est un grossissement de la figure 2 indiquant des paramètres de la sonde optique ; et
- la figure 5 illustre un dispositif de mesure selon l'invention.

Pour raison de clarté, les dimensions des éléments qui sont représentés dans ces figures ne correspondent ni à des dimensions réelles ni à des rapports de dimensions réels. En outre, des références identiques qui sont indiquées dans des figures différentes désignent des éléments identiques ou qui ont des fonctions identiques.

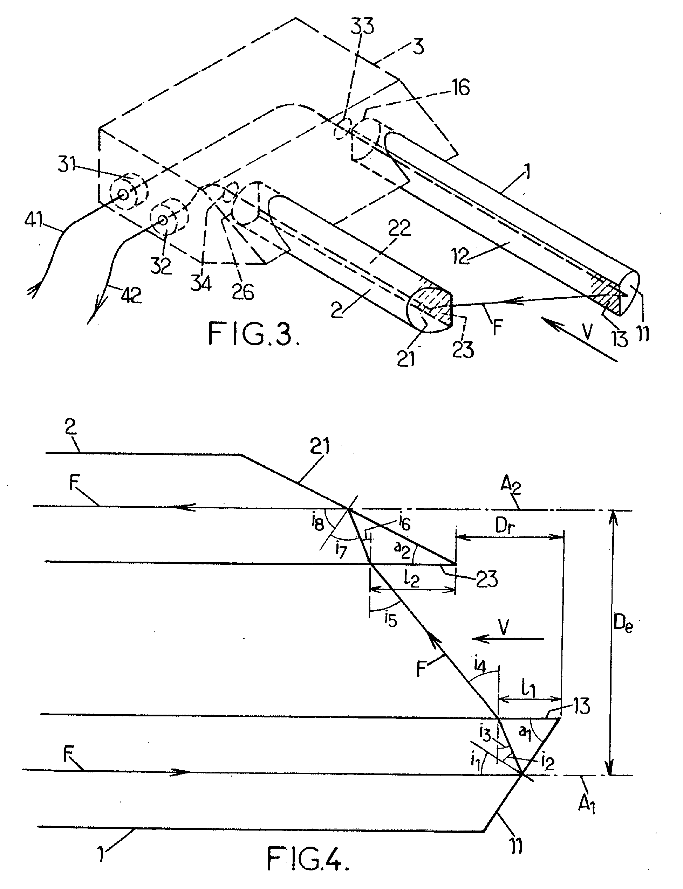

Les figures 2 et 3 montrent deux doigts d'une sonde optique selon l'invention qui sont chacun constitués d'un barreau de matériau rigide, homogène, monobloc et transparent. Comme sur la figure 1, chaque doigt 1 (respectivement 2) possède un axe longitudinal A₁ (resp. A₂), une extrémité en amont avec une face d'extrémité 11 (resp. 21), une surface latérale et une extrémité en aval 16 (resp. 26). Par différence avec la sonde optique de la figure 1, le faisceau lumineux F se propage selon l'invention à l'intérieur du matériau transparent qui constitue le barreau de chaque doigt 1 et 2. Le trajet du faisceau F comprend alors une traversée longitudinale du barreau du doigt 1, à partir de l'extrémité en aval 16 jusqu'à la face d'extrémité en amont 11, avec une propagation rectiligne dans le matériau du barreau du doigt 1, une réflexion sur la face 11 qui est interne au matériau du barreau, une sortie du barreau du doigt 1 par la zone latérale 13, une traversée du milieu M en écoulement entre les deux doigts 1 et 2, une pénétration dans le barreau du doigt 2 par la zone latérale 23, une réflexion interne sur la face 21 du doigt 2 avec propagation dans le matériau du barreau de celui-ci, puis une traversée rectiligne et longitudinale du doigt 2 jusqu'à son extrémité en aval 26. L'introduction du faisceau F par l'extrémité en aval 16 du doigt 1 et sa sortie par l'extrémité en aval 26 du doigt seront décrites plus loin.

Chaque barreau possède une section transversale qui est suffisamment large pour que le faisceau F se propage dans celui-ci selon des segments de trajet qui sont chacun rectilignes. Autrement dit, le faisceau F ne subit pas de réflexion sur la surface latérale de chaque barreau en dehors des zones de qualité optique.

Dans le cadre de l'invention, on entend par zone de qualité optique une portion de la surface de chaque doigt qui est adaptée pour réfléchir ou réfracter le faisceau lumineux F sans le diffuser. Dans le jargon de l'Homme du métier, ces zones ont été traitées par polissage optique. Autrement dit, elles ont une rugosité suffisamment faible pour ne pas causer de diffusion lumineuse qui réduirait sensiblement l'intensité du faisceau lumineux le long du trajet optique qui vient d'être décrit. De préférence, cette rugosité peut être inférieure à la moitié d'une valeur de longueur d'onde du faisceau F, dans les zones 13 et 23 et sur les faces 11 et 21. Pour cela, diverses méthodes de caractérisation de la rugosité peuvent être utilisées, telles que la réflectométrie de rayons X ou l'interférométrie, notamment en utilisant une lame de référence dont la rugosité est connue.

Dans une configuration préférée de la sonde optique, la surface latérale de chaque doigt 1 (resp. 2) peut comporter un chant plan 12 (resp. 22) qui comprend la zone latérale de qualité optique 13 (resp. 23). Par exemple, chaque barreau peut être obtenu à partir d'une ébauche cylindrique de diamètre e₁ égal à 6 mm (millimètre), avec un méplat usiné sur toute sa longueur qui forme le chant 12 ou 22, de sorte que l'épaisseur e₂ de chaque barreau soit réduite à 5 mm perpendiculairement au méplat. L'usinage de chaque barreau est alors facilité. Les chants 12 et 22 respectifs des doigts 1 et 2 sont alors parallèles et orientés en face l'un de l'autre dans la sonde optique.

La longueur L₁ du doigt 1 peut être de 70 mm environ, et la distance d'écartement De entre les deux axes longitudinaux A₁ et A₂ peut être de 24 mm environ. Dans ce cas, la longueur L₂ du doigt 2 peut être de 40 mm environ.

Les barreaux respectifs des doigts 1 et 2 sont maintenus en position et parallèles entre eux par un support 3 représenté en traits interrompus dans la figure 3. Ce support 3 maintient chaque barreau par son extrémité en aval 16 ou 26, parallèlement à l'écoulement du milieu M, avec les extrémités en amont des barreaux qui sont tournées vers l'amont de l'écoulement. Avantageusement, le support 3 peut aussi posséder une forme profilée, pour réduire le plus possible la perturbation qu'il produit lui-même dans l'écoulement du milieu M, et notamment pour qu'une telle perturbation ne remonte pas jusqu'aux extrémités en amont des doigts 1 et 2.

En outre, le support 3 peut être agencé pour amener et récupérer le faisceau lumineux F aux extrémités en aval des barreaux des doigts 1 et 2. Par exemple, le support 3 peut comporter deux ports de fibres optiques 31 et 32, qui sont agencés respectivement pour relier optiquement une fibre optique d'entrée 41 à l'extrémité en aval 16 du barreau du doigt 1, et une fibre optique de sortie 42 à l'extrémité en aval 26 du barreau du doigt 2. Les références 33 et 34 désignent des composants de conformation du faisceau F qui sont insérés entre les extrémités des fibres optiques 41 et 42 et les barreaux. De tels composants sont connus de l'Homme du métier, et peuvent être des lentilles, des sphères ou des miroirs de collimation de petites dimensions.

Alternativement, le faisceau lumineux F peut être amené et récupéré à distance par rapport aux extrémités en aval des barreaux des doigts 1 et 2. Dans ce cas, le faisceau F peut se propager dans le milieu M entre une source lumineuse et le support 3, ainsi qu'entre le support 3 et un détecteur optique.

La zone latérale de qualité optique 13 (resp. 23) est portée par le chant 12 (resp. 22) à proximité immédiate de la face d'extrémité en amont 11 (resp. 21), pour le barreau du doigt 1 (resp. 2). Comme le montre la figure 2, la proportion du trajet du faisceau F entre les zones 13 et 23, qui est contenue dans les parties P du milieu M perturbées par la sonde elle-même, est très réduite.

Les inclinaisons des faces d'extrémités en amont 11 et 21 possèdent alors deux fonctions. D'une part, ces faces 11 et 21 forment ainsi chacune un coin saillant avec le chant 12 ou 22 du doigt correspondant. D'autre part, elles orientent les réflexions du faisceau lumineux F sur ces faces 11 et 21, respectivement à l'intérieur des barreaux des doigts 1 et 2.

Conformément à la figure 4, les angles suivants sont maintenant introduits :
i₁ : angle d'incidence du faisceau F sur la face d'extrémité en amont 11,
i₂ : angle de réflexion du faisceau F sur la face d'extrémité en amont 11,
i₃ : angle d'incidence du faisceau F sur la zone latérale de qualité optique 13,
i₄ : angle d'émergence du faisceau F à partir de la zone latérale de qualité optique 13,
i₅ : angle d'incidence du faisceau F sur la zone latérale de qualité optique 23,
i₆ : angle de réfraction du faisceau F à partir de la zone latérale de qualité optique 23,
i₇ : angle d'incidence du faisceau F sur la face d'extrémité en amont 21,
i₈ : angle de réflexion du faisceau F sur la face d'extrémité en amont 21,
a₁ : angle du coin saillant entre la face d'extrémité en amont 11 et la zone latérale de qualité optique 13, et
a₂ : angle du coin saillant entre la face d'extrémité en amont 21 et la zone latérale de qualité optique 23.

Tous ces angles sont comptés à partir de directions perpendiculaires aux surfaces de qualité optique sur lesquelles se produisent les réflexions ou réfractions concernées.

Les lois de Fresnel de la réflexion et de la réfraction indiquent que i₁ et i₂ sont égaux, n₁·sin i₃ = n_{M}·sin i₄, n_{M}·sin i₅ = n₂·sin i₆, et i₇ et i₈ sont égaux, où n₁, n₂ et n_{M} sont les valeurs respectives d'indice de réfraction optique du matériau du barreau du doigt 1, du matériau du barreau du doigt 2 et du milieu M.

Géométriquement, il vient : a₁ = 90° - i₁, a₁ = i₂ + i₃, i₄ et i₅ sont égaux et non nuls, a₂ = i₇ - i₆ et a₂ = 90° - i₈.

En outre, la relation suivante donne le retrait Dᵣ de l'extrémité en amont du doigt 2 par rapport à celle du doigt 1, en fonction de la distance d'écartement De entre les axes longitudinaux A₁ et A₂ : tan i₄ = (Dᵣ-I₂ +I₁)/Dₑ, où I₁ (resp. I₂) désigne la distance entre la pointe de l'extrémité en amont du doigt 1 (resp. 2) et le point de traversée de la zone 13 (resp. 23) par le faisceau lumineux F.

Dans la pratique, le matériau du barreau de chaque doigt 1, 2 possède presque toujours une valeur de l'indice de réfraction optique pour le faisceau lumineux F, qui est supérieure à la valeur n_{M} de l'indice pour le milieu M. Pour cette raison, l'angle i₄ = i₅ du faisceau F entre les deux doigts est supérieur aux angles i₃ et i₆ à l'intérieur de chaque barreau. Pour pouvoir déterminer la vitesse de l'écoulement à partir d'une analyse Doppler d'une bande spectroscopique d'absorption par le milieu M, l'angle i₄ = i₅ n'est pas nul, assurant ainsi que le faisceau F ne soit pas perpendiculaire au vecteur de vitesse V entre les deux doigts 1 et 2. Par exemple, l'angle i₄ = i₅ peut être pris égal à 40° (degré), correspondant à 50° entre le faisceau F et le vecteur de vitesse V. Avantageusement comme il sera présenté plus loin dans cette description, l'angle i₄ = i₅ peut alternativement être choisi pour correspondre à l'incidence de Brewster sur les zones latérales de qualité optique 13 et 23.

Il n'est pas nécessaire pour la mise en oeuvre de l'invention que les barreaux respectifs des deux doigts 1 et 2 soient constitués d'un même matériau transparent. Autrement dit, les matériaux respectifs des deux barreaux peuvent être différents, et l'Homme du métier saura sélectionner ces matériaux en fonction de leurs valeurs d'indice de réfraction, de même que les valeurs des angles précités pour permettre au faisceau F de suivre le trajet voulu.

De même, il n'est pas indispensable non plus pour l'invention que les réflexions du faisceau F sur les faces d'extrémités en amont 11 et 21 soient des réflexions totales. On rappelle qu'une réflexion totale est caractérisée par la proportion d'énergie lumineuse qui est réfléchie, cette proportion étant proche de 100% pour une réflexion dite totale.

Afin de permettre de reproduire l'invention, deux exemples de structures de sondes optiques conformes à l'invention sont maintenant décrits, dans lesquels les réflexions sur les faces d'extrémités en amont 11 et 21 sont totales. Toutefois, il est entendu que les méthodes différentes qui sont utilisées dans ces exemples pour obtenir les réflexions totales peuvent être mélangées dans une même sonde, d'un barreau à l'autre.

Dans le premier exemple, les faces d'extrémités en amont 11 et 21 des doigts 1 et 2 sont chacune munies d'un miroir qui assure que les réflexions du faisceau lumineux F sur ces faces soient totales à l'intérieur du barreau correspondant. Ce miroir peut comprendre au moins une couche métallique qui est déposée sur le barreau, sur sa face d'extrémité en amont. Chaque miroir de face d'extrémité en amont peut en outre être recouvert d'une couche de protection, pour éviter que le miroir soit corrodé par le milieu M. De tels miroirs d'extrémités en amont permettent d'utiliser pour les barreaux un matériau transparent dont l'indice de réfraction n'est pas particulièrement élevé. Par exemple, des barreaux en verre transparent d'indice 1,5 environ peuvent ainsi être utilisés avec un faisceau F qui appartient au domaine de lumière visible, entre 360 nm (nanomètre) et 760 nm.

Dans le second exemple, la face d'extrémité en amont 11, 21 de chacun des doigts 1, 2 est une interface dioptrique entre le matériau du barreau correspondant et le milieu M. La réflexion du faisceau lumineux F sur cette face d'extrémité en amont est alors du type réflexion totale interne, avec un angle d'incidence qui est supérieur à une valeur d'angle limite de transmission donnée par la loi de Snell-Descartes. Cette valeur d'angle limite de transmission est Arcsin(n_{M}/n₁) pour le doigt 1, où Arcsin désigne la fonction inverse du sinus, n₁ est la valeur d'indice de réfraction du matériau du barreau du doigt 1, et avec une expression qui est identique pour le doigt 2. Aucune couche métallique n'est donc nécessaire aux extrémités en amont des deux doigts pour ce second exemple, si bien qu'une telle sonde est compatible avec des milieux M qui peuvent être corrosifs ou très chauds.

Toutefois, en fonction de la valeur qui est désirée pour l'angle i₄ du faisceau F entre les deux doigts, l'indice de réfraction du matériau des barreaux doit être supérieur à une valeur minimale, pour que le trajet du faisceau F qui est proposé par l'invention, à l'intérieur de chaque barreau et entre les deux barreaux, soit compatible avec les lois optiques de Snell-Descartes de réflexion et de réfraction en ayant des réflexions totales internes. Ainsi, pour i₄ fixé à 40°, l'indice de réfraction des deux barreaux doit être supérieur à 1,76 pour que le fonctionnement de la sonde selon le second exemple soit possible.

Le tableau 1 suivant regroupe les paramètres structuraux d'une telle sonde optique, lorsque les deux barreaux sont constitués d'un grenat d'yttrium-aluminium dopé au néodyme (YAG) ayant un indice de réfraction optique qui est compris entre 1,76 et 1,85, par exemple égal à 1,8 pour une longueur d'onde de 2,7 µm (micromètre) du faisceau F. Pour ces valeurs, il a été supposé que le milieu M était gazeux, de sorte que la valeur d'indice n_{M} pouvait être considérée égale à 1.

**Tableau 1**

| | |
|---|---|
| a₁ = 55,46° | a₂ = 34,54° |
| i₁ = i₂ = 34,54° | i₆ = 20,92° |
| i₃ = 20,93° | i₇ = i₈ = 55,46° |
| i₄ = i₅ = 40,0° | De = 30 mm |

Selon un perfectionnement de l'invention, la sonde optique peut comprendre en outre un premier miroir 27 (figure 2), qui est situé à l'extrémité en aval du doigt 2 pour réfléchir le faisceau lumineux F en direction de l'extrémité en amont même doigt 2. De cette façon, le faisceau F traverse le milieu M une seconde fois selon le même trajet entre les deux doigts 1 et 2, mais en sens inverse. Ce doublement de trajet permet d'augmenter l'interaction du faisceau F avec le milieu M, si bien que les valeurs qui sont obtenues pour les caractéristiques physiques et chimiques sont plus précises. Pour une telle configuration avec miroir 27, le faisceau F est à la fois introduit dans la sonde optique et récupéré au niveau de l'extrémité en aval du doigt 1. Dans ce cas, un bi-prisme séparateur de faisceau (non représenté) peut être utilisé pour superposer le faisceau lumineux à introduire en entrée dans la sonde et celui à récupérer en sortie de celle-ci.

Dans un tel cas où le faisceau lumineux F traverse le milieu M en écoulement selon un premier sens puis selon un second sens inverse du premier, l'analyse d'effet Doppler qui est effectuée pour obtenir une évaluation de la vitesse de l'écoulement doit être adaptée. En effet, chaque sens de trajet correspond à un effet Doppler qui est algébriquement opposé à celui de l'autre sens.

Selon un perfectionnement supplémentaire, la sonde optique peut comprendre en outre, en plus du premier miroir 27, un second miroir 17 qui est situé à l'extrémité en aval du doigt 1 pour réfléchir le faisceau lumineux F en direction de l'extrémité en amont de ce même doigt 1. De cette façon, le faisceau F traverse le milieu M de multiples fois selon le même trajet entre les deux doigts 1 et 2, alternativement selon des sens de trajet inverses. La précision des valeurs qui sont obtenues pour les caractéristiques du milieu M en écoulement est ainsi encore augmentée. Dans ce cas, l'un au moins des deux miroirs 17 et 27 peut avoir une transmission résiduelle, pour introduire et extraire facilement le faisceau F dans son trajet optique à l'intérieur de la sonde optique. Toutefois, d'autres méthodes peuvent être utilisées alternativement dans ce but, comme l'insertion d'une lame faiblement réfléchissante sur le trajet optique du faisceau F.

Avantageusement d'une façon générale, mais d'une façon particulièrement préférée lorsque les miroirs 17 et 27 sont utilisés, la sonde optique peut être conçue pour que le faisceau F traverse chaque dioptre entre le matériau des barreaux et le milieu externe selon les conditions d'incidence de Brewster. De cette façon, le faisceau F est transmis à travers ces interfaces sans perte d'intensité par réflexion. Il est seulement rappelé que pour un dioptre d'interface entre un milieu d'incidence et un milieu d'émergence du faisceau F, l'angle d'incidence de Brewster est égal à Arctan(nₑ/nᵢ), où Arctan désigne l'inverse de la fonction tangente, ni est la valeur d'indice de réfraction du milieu d'incidence et ne est celle du milieu d'émergence. Si nécessaire, on pourra se reporter à des ouvrages généraux du domaine optique pour plus de précision sur les conditions d'incidence de Brewster.

Un tel perfectionnement peut être appliqué à l'introduction et/ou à la reprise du faisceau lumineux F aux extrémités en aval des deux doigts 1 et 2. Ainsi, l'extrémité en aval 16, 26 d'au moins un des deux doigts 1, 2 peut être constituée par une face de base du barreau correspondant, cette face de base étant oblique par rapport à l'axe longitudinal A₁, A₂ selon un angle de Brewster. Ainsi, le faisceau lumineux F est réfracté par la face de base sans réflexion lors de l'utilisation de la sonde optique.

Le même perfectionnement peut aussi être appliqué aux extrémités en amont des doigts 1, 2, qui sont immergées dans le milieu M. Ainsi, la sonde optique peut être conçue pour que l'angle i₄ = i₅ corresponde aux conditions d'incidence de Brewster sur les dioptres des zones latérales de qualité optiques 13 et 23.

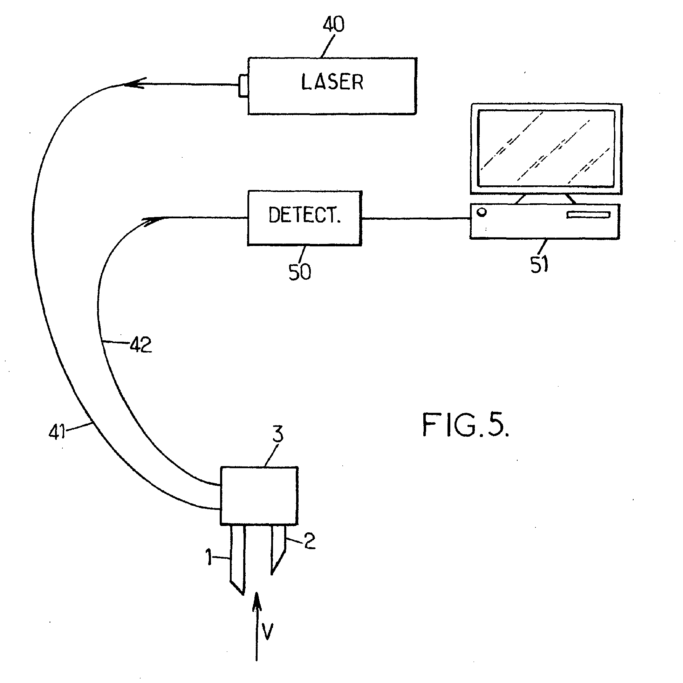

Conformément à la figure 5, un dispositif de mesure selon l'invention comprend la sonde optique des figures 2 à 4, une source optique 40 à longueur d'onde variable, un détecteur photométrique 50 et une unité de traitement des signaux de mesure 51. La fibre optique 41 relie la source 40 à l'entrée de la sonde optique, et la fibre optique 42 relie la sortie de la sonde optique au détecteur 50.

La source 40 est de préférence une source laser, afin de produire le faisceau lumineux F avec une largeur spectrale qui est suffisamment fine par rapport à la précision recherchée sur les valeurs des caractéristiques physiques et chimiques du milieu M en écoulement. La longueur d'onde de la source 40 est variée progressivement pendant que la sonde optique est en place dans le milieu M en écoulement. Cette variation peut être continue ou par sauts discrets en fonction du type de la source laser qui est utilisée. L'intensité lumineuse variable du faisceau F en sortie de la sonde optique est alors détectée pour un échantillonnage des valeurs de longueur d'onde. L'unité de traitement des signaux 51 réalise une analyse spectrale des signaux de mesure d'intensité lumineuse qui sont produits par le détecteur 50. Un tel procédé d'utilisation du dispositif de mesure selon l'invention est similaire à celui des sondes connues antérieurement, si bien qu'il n'est pas nécessaire de le décrire plus en détail. Il est seulement rappelé maintenant le principe d'analyse spectrale qui est mis en oeuvre pour certaines des caractéristiques physiques et chimiques du milieu M en écoulement. Pour une raie spectroscopique d'absorption d'un composé chimique présent dans le milieu M:
- le déplacement de la raie par rapport à sa longueur d'onde centrale lorsque le milieu M est au repos, c'est-à-dire pour une vitesse d'écoulement qui est nulle, fournit une valeur de la vitesse d'écoulement par analyse d'effet Doppler ;
- la largeur de la raie fournit une valeur pour la température du milieu M ; et
- l'aire de la raie fournit une valeur pour la concentration du composé chimique dans le milieu M.

Un tel dispositif de mesure peut être utilisé pour de nombreuses applications, y compris la caractérisation d'écoulements aérauliques créés en soufflerie, ou des échappements de moteurs ou de tuyères d'aéronefs.

Il est entendu que l'invention peut être reproduite tout en introduisant des modifications par rapport aux modes de réalisation qui ont été décrits en détail ci-dessus, pour l'adapter à des applications particulières. Notamment, il est rappelé que les valeurs numériques qui ont été citées ne l'ont été qu'à titre d'exemples.

## Revendications

1. Sonde optique pour mesurer, par détection d'un faisceau lumineux (F) issu d'au moins une source de rayonnement, des caractéristiques physiques et chimiques d'un milieu fluide transparent (M) en écoulement dans lequel la sonde est destinée à être placée, ladite sonde comportant deux doigts (1, 2) rigides et distants dont des axes longitudinaux (A₁, A₂) respectifs sont parallèles, la sonde étant destinée à être orientée pour que les dits axes longitudinaux soient en outre parallèles à un vecteur de vitesse (V) de l'écoulement, chacun des doigts comprenant une extrémité en amont dans l'écoulement, une extrémité en aval (16, 26), et une zone latérale de qualité optique (13, 23) pour transmettre le faisceau lumineux entre ledit doigt et le milieu,
l'extrémité en aval (16) d'un premier (1) des deux doigts étant adaptée pour recevoir le faisceau lumineux (F) issu de la source, et l'extrémité en aval (26) d'un second (2) des deux doigts étant adaptée pour transmettre le faisceau lumineux vers un détecteur,
chaque extrémité en amont de doigt (1, 2) étant pourvue d'une face d'extrémité (11, 21) oblique par rapport à l'axe longitudinal (A₁, A₂), de façon à former un coin saillant avec une surface latérale dudit doigt pour fendre l'écoulement,
les zones latérales de qualité optique (13, 23) des deux doigts (1, 2) étant situées pour transmettre le faisceau lumineux (F) de l'une vers l'autre des dites zones à travers le milieu (M), selon un trajet entre les deux doigts qui n'est pas orthogonal au vecteur de vitesse (V) de l'écoulement,
la sonde étant **caractérisée en ce que**
chaque doigt (1, 2) comprend un barreau plein, monobloc, d'un matériau optiquement transparent pour le faisceau lumineux (F), le barreau s'étendant à partir de l'extrémité en aval (16, 26) jusqu'à la face d'extrémité en amont (11, 21) dudit doigt, et la zone latérale de qualité optique (13, 23) de chaque doigt étant formée par un dioptre entre le matériau du barreau et le milieu (M),
la face d'extrémité en amont (11, 21) de chaque doigt (1, 2) est de qualité optique, et
la zone latérale de qualité optique (13, 23) de chaque doigt (1, 2) est située dans le coin saillant dudit doigt,
et en ce la sonde est agencée de sorte que, lors d'une utilisation de la sonde, le faisceau lumineux (F) reçu à l'extrémité en aval (16) du premier doigt (1)
se propage rectilignement et longitudinalement dans le barreau du premier doigt (1) à l'intérieur du matériau dudit barreau, puis
est réfléchi sur la face d'extrémité en amont (11) du premier doigt (1) à l'intérieur du barreau dudit premier doigt, en direction de la zone latérale de qualité optique (13) du premier doigt, puis
est réfracté par le dioptre de la zone latérale de qualité optique (13) du premier doigt (1), du matériau du barreau dudit premier doigt vers le milieu (M), en direction de la zone latérale de qualité optique (23) du second doigt (2), puis
traverse le milieu (M) entre les premier (1) et second (2) doigts, puis
est réfracté par le dioptre de la zone latérale de qualité optique (23) du second doigt (2), du milieu (M) vers le matériau du barreau dudit second doigt, en direction de la face d'extrémité en amont (21) du second doigt, puis
est réfléchi sur la face d'extrémité en amont (21) du second doigt (2) à l'intérieur du barreau dudit second doigt, puis
se propage rectilignement et longitudinalement dans le barreau du second doigt (2) à l'intérieur du matériau dudit barreau en direction de l'extrémité en aval (26) du second doigt,
et **en ce que** la sonde est adaptée pour que les réflexions du faisceau lumineux (F) sur les faces d'extrémités en amont (11, 21) respectives des deux doigts (1, 2) soient des réflexions totales,
la face d'extrémité en amont (11, 21) de chaque doigt (1, 2) étant une interface dioptrique entre le matériau du barreau correspondant et le milieu (M), et la réflexion du faisceau lumineux (F) sur ladite face d'extrémité en amont étant du type réflexion totale interne, avec un angle d'incidence (i₁, i₇) dudit faisceau lumineux par rapport à une direction perpendiculaire à ladite face d'extrémité en amont qui est supérieur à une valeur d'angle limite de transmission donnée par la loi de Snell-Descartes.

2. Sonde optique selon la revendication 1, **caractérisée en ce que** le matériau du barreau de l'un au moins des doigts (1, 2) est un grenat d'yttrium-aluminium dopé au néodyme (YAG) ayant un indice de réfraction optique compris entre 1,76 et 1,85.

3. Sonde optique selon l'une quelconque des revendications précédentes, **caractérisée en ce que** la surface latérale de chaque doigt (1, 2) comporte un chant plan (12, 22), ledit chant comprenant la zone latérale de qualité optique (13, 23) dudit doigt, les chants respectifs des deux doigts étant parallèles et orientés en face l'un de l'autre.

4. Sonde optique selon l'une quelconque des revendications précédentes, comprenant en outre un premier miroir (27) situé à l'extrémité en aval du second doigt (2) pour réfléchir le faisceau lumineux (F) en direction de l'extrémité en amont dudit second doigt, de sorte que ledit faisceau lumineux traverse le milieu (M) une seconde fois selon le même trajet entre les deux doigts (1, 2), mais en sens inverse.

5. Sonde optique selon la revendication 4, comprenant en outre un second miroir (17) situé à l'extrémité en aval du premier doigt (1) pour réfléchir le faisceau lumineux (F) en direction de l'extrémité en amont dudit premier doigt, de sorte que ledit faisceau lumineux traverse le milieu (M) de multiples fois selon le même trajet entre les deux doigts (1, 2), alternativement selon des sens de trajet inverses.

6. Sonde optique selon l'une quelconque des revendications précédentes, **caractérisée en ce que** l'extrémité en aval (16, 26) d'au moins un des deux doigts (1, 2) est constituée par une face de base du barreau, ladite face de base étant oblique par rapport à l'axe longitudinal (A₁, A₂) dudit barreau selon un angle de Brewster, de sorte que le faisceau lumineux (F) soit réfracté par ladite face de base sans réflexion lors de l'utilisation de la sonde optique.

7. Dispositif de mesure d'au moins une caractéristique physique ou chimique d'un milieu fluide transparent (M) en écoulement, ladite caractéristique étant sélectionnée parmi une vitesse de l'écoulement, une température du milieu, une pression du milieu, une masse volumique du milieu, et une concentration d'au moins un composé chimique contenu dans le milieu, ledit dispositif comprenant :
- une sonde optique selon l'une quelconque des revendications précédentes ;
- un ensemble de source lumineuse (40) à longueur d'onde variable, adapté pour produire le faisceau lumineux (F) et agencé pour transmettre ledit faisceau lumineux à l'extrémité en aval (16) du premier doigt (1) ;
- un détecteur photométrique (50) agencé pour mesurer une intensité du faisceau lumineux (F) transmis entre les deux doigts (1, 2), pour chaque longueur d'onde de l'ensemble de source lumineuse lors d'un fonctionnement dudit dispositif de mesure ; et
- des moyens (51) de traitement de signaux de mesure produits par le détecteur, adaptés pour fournir une valeur pour chaque caractéristique sélectionnée du milieu en écoulement à partir d'une analyse spectrale des signaux de mesure.

8. Dispositif selon la revendication 7, suivant lequel l'ensemble de source lumineuse (40) est de type laser à longueur d'onde variable.

9. Procédé de mesure d'au moins une caractéristique physique ou chimique d'un milieu fluide transparent (M) en écoulement, ladite caractéristique étant sélectionnée parmi une vitesse de l'écoulement, une température du milieu, une pression du milieu, une masse volumique du milieu, et une concentration d'au moins un composé chimique contenu dans le milieu, le procédé comprenant :
- utiliser un dispositif de mesure conforme à la revendication 7 ou 8 ;
- disposer la sonde optique dans le milieu (M), avec les axes longitudinaux (A₁, A₂) des doigts (1, 2) orientés parallèlement à un vecteur de vitesse (V) de l'écoulement, et en orientant vers l'amont de l'écoulement les extrémités des doigts pourvues des faces d'extrémités (11, 21) obliques formant des coins saillants avec les surfaces latérales respectives des dits doigts ;
- activer simultanément l'ensemble de source lumineuse (40) et le détecteur (50) pour produire des signaux de mesure respectifs pour les longueurs d'onde de l'ensemble de source lumineuse ; et
- commander les moyens de traitement (51) pour obtenir une valeur pour chaque caractéristique sélectionnée du milieu en écoulement à partir d'une analyse spectrale des signaux de mesure.

10. Procédé de mesure selon la revendication 9, suivant lequel la sonde optique est conçue pour qu'un angle (i₄, i₅) entre une direction de propagation du faisceau lumineux (F) entre les deux doigts (1, 2) dans le milieu (M) et une direction perpendiculaire aux zones latérales de qualité optique (13, 23), corresponde à des conditions d'incidence de Brewster dudit faisceau lumineux sur les dioptres des dites zones latérales de qualité optique des doigts.

## Patentansprüche

1. Optische Sonde zum Messen durch Detektion eines Lichtbündels (F) aus mindestens einer Strahlungsquelle der physikalischen und chemischen Eigenschaften eines strömenden durchsichtigen fließfähigen Mediums (M), wobei die Sonde dazu bestimmt ist, platziert zu werden, wobei die Sonde zwei starre und beabstandete Finger (1, 2) umfasst, deren jeweilige Längsachsen (A₁, A₂) parallel sind, wobei die Sonde dazu bestimmt ist, orientiert zu sein, damit die Längsachsen ferner zu einem Geschwindigkeitsvektor (V) der Strömung parallel sind, wobei jeder der Finger ein stromaufwärtiges Ende in der Strömung, ein stromabwärtiges Ende (16, 26) und eine seitliche Zone optischer Qualität (13, 23), um das Lichtbündel zwischen dem Finger und dem Medium durchzulassen, umfasst,
wobei das stromabwärtige Ende (16) eines ersten (1) der beiden Finger geeignet ist, um das Lichtbündel (F) aus der Quelle zu empfangen, und das stromabwärtige Ende (26) eines zweiten (2) der beiden Finger geeignet ist, um das Lichtbündel zu einem Detektor durchzulassen,
wobei jedes stromaufwärtige Fingerende (1, 2) mit einer Endseite (11, 21) versehen ist, die im Verhältnis zur Längsachse (A₁, A₂) schräg steht, um eine vorstehende Ecke mit einer Seitenfläche des Fingers zu bilden, um die Strömung zu spalten,
wobei die seitlichen Zonen optischer Qualität (13, 23) der beiden Finger (1, 2) derart angeordnet sind, dass sie das Lichtbündel (F) von der einen in die andere der Zonen durch das Medium (M) hindurch auf einem Weg zwischen den beiden Fingern durchlassen, der zu dem Geschwindigkeitsvektor (V) der Strömung nicht orthogonal ist,
wobei die Sonde **dadurch gekennzeichnet ist, dass**
jeder Finger (1, 2) einen massiven, einstückigen Stab aus einem für das Lichtbündel (F) optisch durchsichtigen Material umfasst, wobei sich der Stab von dem stromabwärtigen Ende (16, 26) bis zur stromaufwärtigen Endseite (11, 21) des Fingers erstreckt, und die seitliche Zone optischer Qualität (13, 23) jedes Fingers durch ein Diopter zwischen dem Material des Stabs und dem Medium (M) gebildet ist,
die stromaufwärtige Endseite (11, 21) jedes Fingers (1, 2) optischer Qualität ist, und
sich die seitliche Zone optischer Qualität (13, 23) jedes Fingers (1, 2) in der vorstehenden Ecke des Fingers befindet,
und dass die Sonde derart eingerichtet ist, dass bei einer Verwendung der Sonde das Lichtbündel (F), das am stromabwärtigen Ende (16) des ersten Fingers (1) empfangen wird,
sich geradlinig und in Längsrichtung in dem Stab des ersten Fingers (1) im Innern des Materials des Stabs ausbreitet, und dann
auf der stromaufwärtigen Endseite (11) des ersten Fingers (1) im Innern des Stabs des ersten Fingers in Richtung der seitlichen Zone optischer Qualität (13) des ersten Fingers reflektiert wird, und dann
durch den Diopter der seitlichen Zone optischer Qualität (13) des ersten Fingers (1) von dem Material des Stabs des ersten Fingers zu dem Medium (M) in Richtung der seitlichen Zone optischer Qualität (23) des zweiten Fingers (2) gebrochen wird, und dann
durch das Medium (M) zwischen den ersten (1) und zweiten (2) Fingern hindurch geht, und dann
von dem Diopter der seitlichen Zone optischer Qualität (23) des zweiten Fingers (2) von dem Medium (M) zu dem Material des Stabs des zweiten Fingers in Richtung der stromaufwärtigen Endseite (21) des zweiten Fingers gebrochen wird, und dann
an der stromaufwärtigen Endseite (21) des zweiten Fingers (2) im Innern des Stabs des zweiten Fingers reflektiert wird, und sich dann
geradlinig und in Längsrichtung in dem Stab des zweiten Fingers (2) im Innern des Materials des Stabs in Richtung auf das stromabwärtige Ende (26) des zweiten Fingers ausbreitet,
und dass die Sonde geeignet ist, damit die Reflexionen des Lichtbündels (F) an den jeweiligen stromaufwärtigen Endseiten (11, 21) der beiden Finger (1, 2) Totalreflexionen sind,
wobei die stromaufwärtige Endseite (11, 21) jedes Fingers (1, 2) eine dioptrische Grenzfläche zwischen dem Material des entsprechenden Stabs und dem Medium (M) ist, und die Reflexion des Lichtbündels (F} an der stromaufwärtigen Endseite nach Art einer internen Totalreflexion ist, mit einem Einfallswinkel (i₁, i₂) des Lichtbündels im Verhältnis zu einer Richtung, die zu der stromaufwärtigen Endseite rechtwinklig ist, der größer als ein Durchlässigkeitsgrenzwinkelwert ist, der durch das Snell-Descartes-Gesetz gegeben ist.

2. Optische Sonde nach Anspruch 1, **dadurch gekennzeichnet, dass** das Material des Stabs mindestens eines der Finger (1, 2) ein Neodym-dotierter Yttrium-Aluminium-Granat (YAG) mit einem optischen Brechungskoeffizient zwischen 1,76 und 1,85 ist.

3. Optische Sonde nach einem der vorhergehenden Ansprüche, **dadurch gekennzeichnet, dass** die Seitenfläche jedes Fingers (1, 2) eine ebene Kante (12, 22) umfasst, wobei die Kante die seitliche Zone optischer Qualität (13, 23) des Fingers umfasst, wobei die jeweiligen Kanten der beiden Finger parallel sind und einander gegenüberliegend orientiert sind.

4. Optische Sonde nach einem der vorhergehenden Ansprüche, ferner umfassend einen ersten Spiegel (27), der sich am stromabwärtigen Ende des zweiten Fingers (2) befindet, um das Lichtbündel (F) in Richtung auf das stromaufwärtige Ende des zweiten Fingers zu reflektieren, so dass das Lichtbündel auf dem gleichen Weg zwischen den beiden Fingern (1, 2), jedoch in umgekehrter Richtung, ein zweites Mal durch das Medium (M) geht.

5. Optische Sonde nach Anspruch 4, ferner umfassend einen zweiten Spiegel (17), der sich am stromabwärtigen Ende des ersten Fingers (1) befindet, um das Lichtbündel (F) in Richtung auf das stromaufwärtige Ende des ersten Fingers zu reflektieren, so dass das Lichtbündel auf dem gleichen Weg zwischen den beiden Fingern (1, 2), abwechselnd in umgekehrten Wegrichtungen, mehrmals durch das Medium (M) geht.

6. Optische Sonde nach einem der vorhergehenden Ansprüche, **dadurch gekennzeichnet, dass** das stromabwärtige Ende (16, 26) mindestens eines der beiden Finger (1, 2) aus einer Basisseite des Stabs besteht, wobei die Basisseite im Verhältnis zur Längsache (A₁, A₂) des Stabs in einem Brewster-Winkel schräg steht, so dass das Lichtbündel (F) bei der Verwendung der optischen Sonde von der Basisseite ohne Reflexion gebrochen wird.

7. Vorrichtung zum Messen mindestens einer physikalischen oder chemischen Eigenschaft eines strömenden durchsichtigen fließfähigen Mediums (M), wobei die Eigenschaft aus einer Geschwindigkeit der Strömung, einer Temperatur des Mediums, einem Druck des Mediums, einer Volumenmasse des Mediums und einer Konzentration mindestens einer chemischen Verbindung, die in dem Medium enthalten ist, ausgewählt wird, wobei die Vorrichtung Folgendes umfasst:
- eine optische Sonde nach einem der vorhergehenden Ansprüche;
- eine Lichtquelleneinheit (40) mit variabler Wellenlänge, die geeignet ist, um das Lichtbündel (F) zu erzeugen, und eingerichtet ist, um das Lichtbündel am stromabwärtigen Ende (16) des ersten Fingers (1) durchzulassen;
- einen photometrischen Detektor (50), der eingerichtet ist, um eine Intensität des Lichtbündels (F), das zwischen den beiden Fingern (1, 2) durchgelassen wird, für jede Wellenlänge der Lichtquelleneinheit beim Betrieb der Messvorrichtung zu messen; und
- Mittel (51) zur Verarbeitung von Messsignalen, die von dem Detektor erzeugt werden, die geeignet sind, um für jede ausgewählte Eigenschaft des strömenden Mediums aus einer Spektralanalyse der Messsignale einen Wert bereitzustellen.

8. Vorrichtung nach Anspruch 7, wobei die Lichtquelleneinheit (40) nach Art eines Lasers mit variabler Wellenlänge ist.

9. Verfahren zum Messen mindestens einer physikalischen oder chemischen Eigenschaft eines strömenden durchsichtigen fließfähigen Mediums (M), wobei die Eigenschaft aus einer Geschwindigkeit der Strömung, einer Temperatur des Mediums, einem Druck des Mediums, einer Volumenmasse des Mediums und einer Konzentration mindestens einer chemischen Verbindung, die in dem Medium enthalten ist, ausgewählt wird, wobei das Verfahren folgende Schritte umfasst:
- Verwenden einer Messvorrichtung nach Anspruch 7 oder 8;
- Anordnen der optischen Sonde in dem Medium (M), wobei die Längsachsen (A₁, A₂) der Finger (1, 2) parallel zu einem Geschwindigkeitsvektor (V) der Strömung orientiert sind, und wobei die Enden der Finger, die mit den schrägen Endseiten (11, 21) versehen sind, die vorstehende Ecken mit den jeweiligen Seitenflächen der Finger bilden, stromaufwärts orientiert sind;
- gleichzeitiges Aktivieren der Lichtquelleneinheit (40) und des Detektors (50), um jeweilige Messsignale für die Wellenlängen der Lichtquelleneinheit zu erzeugen; und
- Steuern der Verarbeitungsmittel (51), um einen Wert für jede ausgewählte Eigenschaft des strömenden Mediums aus einer Spektralanalyse der Messsignale zu erzielen.

10. Messverfahren nach Anspruch 9, wobei die optische Sonde derart ausgelegt ist, dass ein Winkel (i₄, i₅) zwischen einer Ausbreitungsrichtung des Lichtbündels (F) zwischen den beiden Fingern (1, 2) in dem Medium (M) und einer Richtung, die zu den seitlichen Zonen optischer Qualität (13, 23) rechtwinklig ist, den Brewster-Einfallsbedingungen des Lichtbündels auf die Diopter der seitlichen Zonen optischer Qualität der Finger entspricht.

## Claims

1. Optical probe for measuring, by detection of a light beam (F) originating from at least one radiation source, physical and chemical characteristics of a flowing transparent fluid medium (M) in which the probe is intended to be placed, said probe comprising two rigid fingers (1, 2) spaced apart from each other and having respective longitudinal axes (A₁, A₂) which are parallel, the probe being intended to be oriented so that said longitudinal axes are also parallel to velocity vector (V) of the flow, each finger comprising an end upstream within the flow, an end downstream (16, 26), and a side region of optical quality (13, 23) for transmitting the light beam between said finger and the medium,
the downstream end (16) of a first one (1) of the two fingers being adapted to receive the light beam (F) originating from the source, and the downstream end (26) of a second one (2) of the two fingers being adapted to transmit this light beam towards a detector,
each upstream end of the fingers (1, 2) having an end face (11, 21) which is oblique relative to the longitudinal axis (A₁, A₂), forming together with a side surface of said finger, a projecting corner in order to split the flow,
the side regions of optical quality (13, 23) of the two fingers (1, 2) being situated so as to transmit the light beam (F) from one to the other of said regions through the medium (M), in a path between the two fingers which is not orthogonal to the flow velocity vector (V),
the probe being **characterized by**
each finger (1, 2) comprising a solid rod that is single piece out of a material optically transparent to the light beam (F), the rod extending from the downstream end (16, 26) to the upstream end face (11, 21) of said finger, and the side region of optical quality (13, 23) of each finger being formed by a refracting surface between the material of the rod and the medium (M),
the upstream end face (11, 21) of each finger (1, 2) being of optical quality, and
the side region of optical quality (13, 23) of each finger (1, 2) being situated in the projecting corner of said finger,
and by the probe being arranged so that, during use of the probe, the light beam (F) received at the downstream end (16) of the first finger (1)
is propagated rectilinearly and longitudinally in the rod of the first finger, (1) inside the material of said rod, then
is reflected on the upstream end face (11) of the first finger (1) inside the rod of said first finger, towards the side region of optical quality (13) of the first finger, then
is refracted by the refracting surface of the side region of optical quality (13) of the first finger (1), from the material of the rod of said first finger to the medium (M), towards the side region of optical quality (23) of the second finger (2), then
traverses the medium (M) between the first (1) and second (2) fingers, then
is refracted by the refracting surface of the side region of optical quality (23) of the second finger (2), from the medium (M) to the material of the rod of the said second finger, in the direction of the upstream end face (21) of the second finger, then
is reflected on the upstream end face (21) of the second finger (2) inside the rod of said second finger, then
is propagated rectilinearly and longitudinally within the rod of the second finger (2), inside the material of said rod, towards the downstream end (26) of the second finger,
and by the probe being adapted so that the reflections of the light beam (F) on the respective upstream end faces (11, 21) of the two fingers (1, 2) are total reflections,
the upstream end face (11, 21) of at least one of the fingers (1, 2) being a dioptric interface between the material of the corresponding rod and the medium (M), and the reflection of the light beam (F) on said upstream end face being a total internal reflection, with an angle of incidence (i₁, i₇) of said light beam relative to a direction perpendicular to said upstream end face which is greater than a critical angle transmission value given by Snell's law.

2. Optical probe according to claim 1, **characterized in that** the material of the rod of at least one of the fingers (1, 2) is a neodymium-doped yttrium-aluminum garnet (YAG) having an optical refractive index of between 1.76 and 1.85.

3. Optical probe according to any of the above claims, **characterized in that** the side surface of each finger (1, 2) comprises a flat face (12, 22), said flat face comprising the side region of optical quality (13, 23) of said finger, the respective flat faces of the two fingers being parallel and oriented so as to face one another.

4. Optical probe according to any of the above claims, additionally comprising a first mirror (27) located at the downstream end of the second finger (2) in order to reflect the light beam (F) in the direction of the upstream end of said second finger, so that said light beam traverses the medium (M) a second time along the same path between the two fingers (1, 2), but in reverse direction.

5. Optical probe according to claim 4, additionally comprising a second mirror (17) located at the downstream end of the first finger (1) in order to reflect the light beam (F) towards the upstream end of said first finger, so that said light beam traverses the medium (M) multiple times along the same path between the two fingers (1, 2), alternating between two inverse directions of the path.

6. Optical probe according to any of the above claims, **characterized in that** the downstream end (16, 26) of at least one of the two fingers (1, 2) consists of a base surface of the rod, said base surface being oblique relative to the longitudinal axis (A₁, A₂) of said rod at Brewster's angle, so that the light beam (F) is refracted by said base surface without reflection during use of the optical probe.

7. Device for measuring at least one physical or chemical characteristic of a flowing transparent fluid medium (M), said characteristic being selected from among: a velocity of the flow, a temperature of the medium, a pressure of the medium, a density of the medium, and a concentration of at least one chemical compound contained in the medium, said device comprising:
- an optical probe according to any of the above claims;
- a variable-wavelength light source assembly (40), adapted to produce the light beam (F) and arranged to transmit said light beam to the downstream end (16) of the first finger (1);
- a photometric detector (50) arranged to measure an intensity of the light beam (F) transmitted between the two fingers (1, 2), for each wavelength of the light source assembly during operation of said measurement device; and
- means (51) for processing measurement signals produced by the detector, adapted to provide a value for each selected characteristic of the flowing medium based on a spectral analysis of the measurement signals.

8. Device according to claim 7, wherein the light source assembly (40) is of variable wavelength laser type.

9. Method for measuring at least one physical or chemical characteristic of a flowing transparent fluid medium (M), said characteristic being selected from among: a velocity of the flow, a temperature of the medium, a pressure of the medium, a density of the medium, and a concentration of at least one chemical compound contained in the medium, said method comprising:
- using a measurement device according to claim 7 or 8;
- placing the optical probe in the medium (M), with the longitudinal axes (A₁, A₂) of the fingers (1, 2) being parallel to the flow velocity vector (V), and orienting towards the upstream direction of the flow the finger ends having the oblique end faces (11, 21) which, together with the respective side surfaces of said fingers, form projecting corners;
- simultaneously activating the light source assembly (40) and the detector (50) in order to produce respective measurement signals for the wavelengths of the light source assembly; and
- controlling the processing means (51) to obtain a value for each selected characteristic of the medium during flow, based on spectral analysis of the measurement signals.

10. Measurement method according to claim 9, wherein the optical probe is designed so that an angle (i₄, i₅) between a direction of propagation of the light beam (F) between the two fingers (1, 2) in the medium (M) and a direction perpendicular to the side regions of optical quality (13, 23), corresponds to Brewster incidence conditions for said light beam on the refractive surfaces of said side regions of optical quality of the fingers.
